Europäisches Patentamt

European Patent Office

Office européen des brevets

(11) Veröffentlichungsnummer: **0 489 358 A1**

(12) **EUROPÄISCHE PATENTANMELDUNG**

(21) Anmeldenummer: **91120389.1**

(22) Anmeldetag: **28.11.91**

(51) Int. Cl.⁵: **F28G 1/16,** //A23G1/04

(30) Priorität: **03.12.90 DE 4038481**

(43) Veröffentlichungstag der Anmeldung:
**10.06.92 Patentblatt 92/24**

(84) Benannte Vertragsstaaten:
**AT BE CH DE FR IT LI NL**

(71) Anmelder: **Weggenmann, Gustl**
**Imtherstrasse 7**
**W-7960 Aulendorf(DE)**

(72) Erfinder: **Weggenmann, Gustl**
**Imtherstrasse 7**
**W-7960 Aulendorf(DE)**

(74) Vertreter: **Patentanwälte Dipl.-Ing. E. Eisele**
**Dr.-Ing. H. Otten**
**Seestrasse 42**
**W-7980 Ravensburg(DE)**

(54) **Verfahren und Vorrichtung zur Reinigung wassergekühlter Hohlwalzen.**

㉗ Es wird ein Verfahren zur Reinigung des zylindrischen Innenraums von horizontal eingebauten wassergekühlten Hohlwalzen (1) mit einer verhältnismäßig kleinen zentralen Walzenöffnung (3) an einer Stirnseite vorgeschlagen, das ohne Verwendung von Chemikalien und ohne Ausbau der Walzen durchgeführt werden kann. Die Verunreinigungen (31) werden mittels eines Hochdruck-Wasserstrahls von der Mantelinnenfläche abgelöst und gleichzeitig zusammen mit dem sich sammelndem Wasser abgesaugt. Eine Spritzdüse (13) und eine Saugdüse (14) werden bei sich drehender Walze langsam in axialer Richtung gemeinsam bewegt. Eine besonders geeignete Vorrichtung hierfür besteht aus einem länglichen Düsenhalter, der mit einem durch die Walzenöffnung (3) steckbaren Träger (29) um eine gemeinsame Querachse (30) schwenkbar verbunden ist, und aus einem Spannstück (23), welches den Düsenhalter in einer Querstellung bezüglich des Trägers (29) arretiert.

FIG. 2

Die Erfindung betrifft ein Verfahren zur Reinigung des zylindrischen Innenraums von horizontal eingebauten wassergekühlten Hohlwalzen mit einer verhältnismäßig kleinen zentralen Walzenöffnung an einer Stirnseite.

Derartige aus Metall gegossene Walzen mit glatter Oberfläche werden z. B. in der Lebensmittelindustrie, insbesondere Schokoladenindustrie, eingesetzt. Die Länge der Walzen beträgt üblicherweise zwischen 900 und 2.500 mm. Meist bilden drei, fünf oder mehr einzeln angetriebene, einander berührende Walzen sogenannte Walzwerke, wobei die zu verarbeitende fetthaltige Masse als über die gesamte Walzenlänge gleichmäßig verteilter Belag von einer Walze auf die nächste übernommen wird und so das ganze Walzwerk durchläuft.

Da sich die Walzen bei diesem Prozeß erwärmen und die Bearbeitungsmasse sehr temperaturempfindlich ist, müssen die Walzen wirkungsvoll gekühlt werden. Dies geschieht in der Weise, daß ein auf seiner ganzen Länge mit Düsenöffnungen besetztes Spritzrohr durch die Walzenöffnung in den Innenraum hinein ragt und Kühlwasser auf die Mantelinnenfläche sprüht. Das Kühlwasser sammelt sich in der unteren Walzenhälfte bis zur Walzenöffnung und läuft durch diese frei über. Durch Messung der Temperatur des Überlaufwassers und entsprechende Steuerung des Kühlwasserstroms wird die Walzentemperatur genau geregelt.

Mit der Zeit setzen sich an den Walzeninnenflächen Kalk und andere im Kühlwasser enthaltene Verunreinigungen an. Es bilden sich Verkrustungen, die stellenweise auch abplatzen können, so daß dann infolge unterschiedlicher Kühlung die Walzenoberflächentemperatur örtlich verschieden ist. Das führt zu einer Verungleichmäßigung des BearbeitungsmassenBelags. Die Walzen tragen ungleichmäßig, der Verschleiß steigt und die Walzenstandzeit verringert sich. Die Innenreinigung der Hohlwalzen, möglichst im eingebauten Zustand, ist daher ein vordringliches Betriebsproblem.

Es ist bekannt, die Reinigung durch Einbringen von Säuren und anderen Chemikalien in den Walzeninnenraum durchzuführen. Grundsätzlich ist jedoch die Verwendung chemischer Stoffe im Lebensmittelbereich unerwünscht und es kommt hinzu, daß Säuren neben den Kalkkrusten stellenweise auch das Gußmetall zerfressen, was zu Unwuchten und vorzeitigem Zerstören der Walzen führen kann.

Der Erfindung liegt die Aufgabe zugrunde, ein Reinigungsverfahren und eine zu dessen Durchführung geeignete Vorrichtung vorzuschlagen, mit dem bzw. mit der unter Verzicht auf die Verwendung von chemischen Stoffen die Hohlwalzen in ihrer eingebauten horizontalen Stellung einwandfrei gereinigt werden können.

Diese Aufgabe wird erfindungsgemäß dadurch gelöst, daß die Verunreinigungen mittels eines Hochdruck-Wasserstrahls von der Mantelinnenfläche abgelöst, zerkleinert und gleichzeitig zusammen mit dem sich unten in der Walze ansammelnden Wasser abgesaugt werden. Zwar sind Hochdruck-Wasserstrahl-Reinigungsverfahren an sich bekannt. Die Schwierigkeit im vorliegenden Fall liegt darin, daß der Reinigungsvorgang nicht beobachtet werden kann und sich in einem geschlossenen Innenraum abspielen muß, der nur durch eine einzige stirnseitige Walzenöffnung von beispielsweise 58 mm Durchmesser zugänglich ist. Die wesentlichen Merkmale des vorgeschlagenen Verfahrens bestehen darin, daß eine mit einer Hochdruck-Wasserleitung verbundene Spritzdüse und eine mit einer Saugleitung verbundene Saugdüse bei sich drehender Walze langsam im Innenraum in axialer Richtung gemeinsam bewegt werden. Erfahrungsgemäß zerschlägt der Wasserstrahl, ohne die Metalloberfläche anzugreifen, die Verkrustungen zu Partikeln von einer Größe, die ohne weiteres durch Absaugen entfernt werden können.

Eine bevorzugte Vorrichtung zur Durchführung des Verfahrens umfaßt einen länglichen Düsenhalter, der an einem Ende mit einer Spritzdüse und am entgegengesetzten Ende mit einer Saugdüse versehen ist, einen durch die Walzenöffnung steckbaren länglichen Träger, dessen inneres Ende etwa in der Mitte des Düsenhalters mit diesem um eine gemeinsame Querachse schwenkbar verbunden ist, und ein längliches Spannstück, welches den Düsenhalter in einer Querstellung bezüglich des Trägers arretiert. Es ergibt sich somit im Betrieb eine T-förmige Anordnung, wobei der Düsenhalter den T-Schenkel bildet und mit der Spritzdüse oben und der Saugdüse unten vertikal im Walzeninnenraum steht, während der Träger und das Spannstück den Mittelschenkel bilden und axial durch die Walzenöffnung greifen.

Um den Düsenhalter auf einfache Weise durch die Walzenöffnung einführen und in seine Querstellung bringen zu können, wird vorgeschlagen, daß der Träger als Traggabel ausgebildet ist mit einer Gewindebuchse oder dgl. und mit zwei an dieser an gegenüberliegenden Stellen des Umfangs ansitzenden etwa achsparallelen Zinken, deren freie Enden die Lagerstellen bilden. Das Spannstück durchsetzt die Gewindebuchse und stützt sich mittels eines besonderen Spannorgans, beispielsweise eines Schraubrings oder einer Schraubmuffe, an dieser ab. Dadurch gelingt es, eine ausreichend große axiale Arretierkraft - oder, wie nachfolgend erläutert wird, Dichtkraft - aufzubringen.

Weiterbildungen der Erfindung befassen sich mit dem Problem, die Spritz- und Saugdüse mit einer außerhalb der Walze befindlichen Hochdruckbzw. Saugpumpe durch Leitungen zu verbinden. Ein Grundgedanke besteht darin, daß das Spannstück ein Saugrohr bildet und an der Saugdüse des Düsenhalters anschließbar ist. Dieses Saugrohr kann querschnittlich so gestaltet sein, daß daneben noch ein zur Spritzdüse führender Hochdruckschlauch im Öffnungsquerschnitt der Walzenöffnung Platz findet. In diesem Fall könnte dann auch der Düsenhalter im Bereich der Saugdüse querschnittlich so ausgebildet sein, daß er mit der Traggabel und dem Hochdruckschlauch durch die Walzenöffnung paßt. Dabei wird davon ausgegangen, daß es möglich ist, den Hochdruckschlauch zur Erreichung der Querstellung des Düsenhalters mit einem ausreichend engen Radius um 90° zu biegen.

Einfacher wird das Einbringen des Düsenhalters in den Walzeninnenraum, wenn nach einem weiteren Vorschlag das Spannstück als ein Saug- und ein Druckrohr umfassendes Doppelrohr ausgebildet ist und daß am Düsenhalter Steckfassungen, insbesondere mit Dichtungen, für die entsprechend geformten Anschlußenden des Doppelrohres vorgesehen sind. In diesem Fall wird erst beim Einführen des als Spannstück wirkenden Doppelrohres die Verbindung der Düsen nach außen hergestellt. Eine bevorzugte Ausführungsform besteht ferner darin, daß das Druckrohr im Innenquerschnitt des Saugrohrs und die an der Spritzdüse angeschlossene Steckfassung im Innenquerschnitt der an der Saugdüse angeschlossenen Steckfassung enthalten ist.

Der Vorschub des Düsenhalters kann auch in fester Relation zur Drehgeschwindigkeit der Hohlwalze stehen. Dazu eignet sich vorzugsweise ein Spindeltrieb. Es wird vorgeschlagen, daß an das Spannstück ein mit einem durchgehenden Außengewinde versehenes Verlängerungsrohr angeschlossen ist, welches mit dem Innengewinde einer an der Hohlwalze befestigten Spindelmutter zusammenwirkt. Wenn sich also die Walze dreht, macht das als Spindel wirkende Verlängerungsrohr eine durch das Gewinde bestimmte Axialbewegung.

Der Antrieb der Walze kann mit einem beliebigen, vorzugsweise drehzahlregelbaren Antriebsmotor und entsprechender Übersetzung erfolgen. Der für den Walzenbetrieb dimensionierte normale Antriebsmotor wird sich für diesen Zweck meist nicht eignen, so daß man die einzelne Walze, z. B. über Keilriemen, mit einem besonderen Elektromotor oder Hydraulikmotor antreiben wird. Letzterer hat einen besonders großen Drehzahl-Stellbereich.

Andererseits kann zum Vorschub des Düsenhalters, soweit die räumlichen Voraussetzungen gegeben sind, auch ein Hydraulikzylinder verwendet werden, dessen Kolben an einer Verlängerungsstange des Spannstücks oder dgl. angreift. Die Drehzahl der Hohlwalze wird gemessen. Ein günstiger mittlerer Wert liegt bei etwa 20 U/min. Die Vorschubgeschwindigkeit kann beobachtet und je nach Bedarf eingestellt werden.

Ein Ausführungsbeispiel der Erfindung wird nachfolgend anhand der Zeichnung erläutert. Im einzelnen zeigt

Fig. 1 eine schematisierte Gesamtdarstellung einer Hohlwalze und der zur Durchführung des Reinigungsverfahrens erforderlichen Vorrichtungen,

Fig. 2 eine axiale Teilschnittdarstellung der Hohlwalze und des Kopfanschlußstücks in größerem Maßstab,

Fig. 3 einen Axialschnitt des Reinigungswerkzeugs in abermals größerem Maßstab und

Fig. 4 die Traggabel und den in Längsrichtung geschwenkten Düsenhalter von oben gesehen im Maßstab wie Fig. 3.

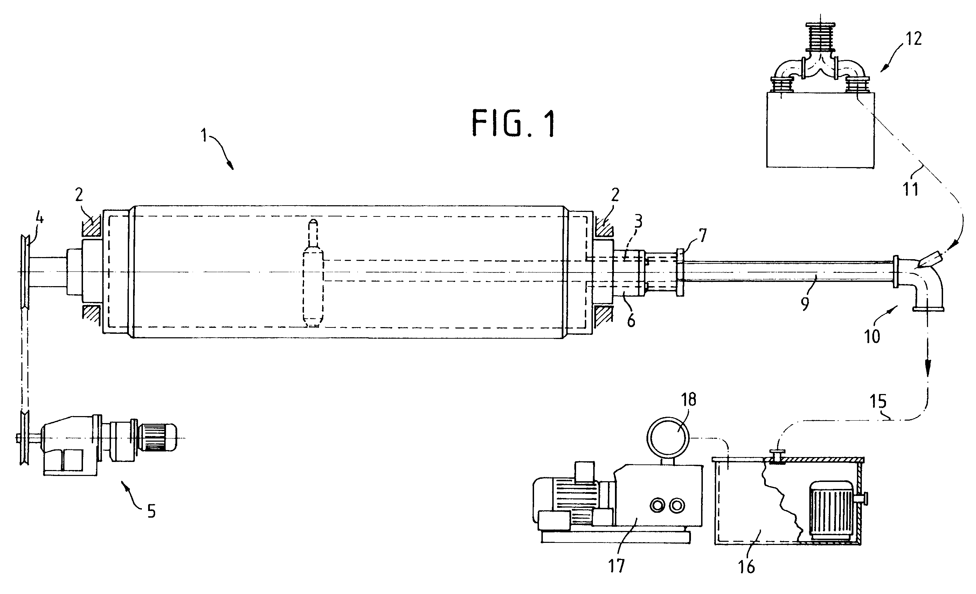

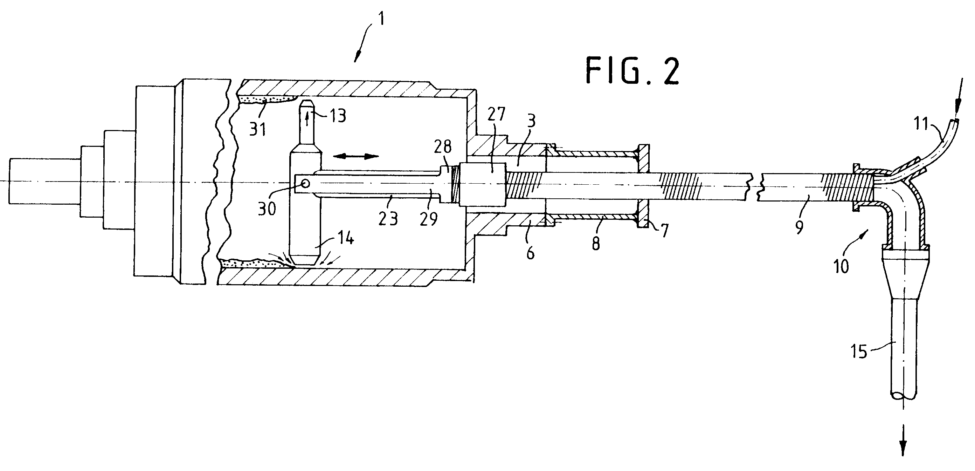

In Fig. 1 ist eine einzelne Hohlwalze 1, die einen Teil eines z. B. bei der Schokoladenherstellung verwendeten Walzwerks bildet, mit ihren schematisch dargestellten Lagerstellen 2 in der Außenansicht wiedergegeben. Sie ist an der linken Stirnseite geschlossen und hat an der rechten Stirnseite eine Öffnung 3 von etwa 58 mm Durchmesser (s. auch Fig. 2). Zur Reinigung ist der normale Walzenantrieb abgekuppelt und dafür eine Riemenscheibe 4 angebracht, welche über einen Keilriemen von einem eigenen Elektro-Getriebemotor 5 angetrieben wird, dessen Drehzahl einstellbar ist.

Auf die Stirnfläche des vordersten rechten Walzenabschnitts 6 ist eine plattenförmige Spindelmutter 7 mittels einer Abstandshülse 8 aufgeflanscht. Diese Spindelmutter steht in Eingriff mit einem Gewinderohr 9, das in die Hohlwalze 1 hineinreicht und dort mit dem noch zu beschreibenden Reinigungswerkzeug in Verbindung steht. Am rechten Ende ist auf das Gewinderohr ein Kopfanschlußstück 10 aufgesetzt. Dieses bildet einen Einlaß für einen Hochdruckschlauch 11, der von einer dieselgetriebenen Hochdruck-Wasserpumpe 12 kommt. Der Hochdruckschlauch 11 erstreckt sich durch das Gewinderohr 9 und speist eine Spritzdüse 13. Andererseits steht das Kopfstück 10 über das Gewinderohr 9 selbst mit einer Saugdüse 14 in Verbindung und dient als Anschluß für einen Saugschlauch 15, der anderenends an einem Wasservorabscheider 16 mit Tauchpumpe angeschlossen ist. Schließlich schafft eine Vakuumpumpe 17 den Unterdruck im Wasservorabscheider 16, wobei ein Wasserfilter 18 dazwischengeschaltet ist.

In den Figuren 2 bis 4 ist das Reinigungswerkzeug selbst deutlicher dargestellt. Es besteht aus einem Düsenhalter 19, einem als Spannstück 20 ausgebildeten Doppelrohr und einer Traggabel 21.

Der Düsenhalter 19 ist die Kombination der Spritzdüse 13 mit der dickeren Saugdüse 14. Eine seitliche konische Öffnung 22 der Saugdüse 14 ist zum Einstecken des Saugrohrs 23 des Spannstücks 20 vorgesehen. Innerhalb dieser Öffnung 22 befindet sich eine ebenfalls konische und mit einer nicht dargestellten Dichtung versehene Hochdruck-Anschlußöffnung 24 in der unteren stirnseitig geschlossenen Partie der Spritzdüse 13. Diese Anschlußöffnung 24 dient zur Verbindung mit einem Druckrohr 25, das innerhalb des Saugrohrs 23 befestigt ist und mit seinem konisch zulaufenden linken Ende das Saugrohr 23 ein wenig überragt. Auch das rechte Ende des Druckrohrs 25 ragt über das Saugrohr 23 hinaus und endet in einer Anschlußverschraubung 26 für den Hochdruckschlauch 11. Das rechte Ende des Saugrohrs 23 wird wahlweise mit Gewinderohren 9 verschiedener Länge verbunden. Auf jedem Gewinderohr sitzt eine Schraubmuffe 27, die in Längsmitte einen inneren Ringbund 27 aufweist. An diesen Ringbund wird die Stirnfläche des Saugrohrs 23, erforderlichenfalls unter Zwischenlage einer Dichtung, angelegt.

Mit Hilfe der Traggabel 21 kann der Düsenhalter 19 durch die Öffnung 3 in die Hohlwalze 1 hineingebracht, in Betriebsstellung quer zur Walzenachse eingestellt und mit den Anschlußleitungen verbunden werden. Die Traggabel besteht aus einer Gewindehülse 28 als Gabelkopf und zwei streifenförmigen, sich parallel erstreckenden Gabelzinken 29, die am anderen Ende den Düsenhalter 19 mittig und um eine gemeinsame Querachse 30 schwenkbar aufnehmen. Die Traggabel 21 ist aus einem Rohr hergestellt, das auf dem größten Teil seiner Länge so abgefräst wurde, daß nur noch die sich diametral gegenüberstehenden Gabelzinken 29 übrig blieben. Das Rohrende bildet die Gewindehülse 28. Ihr lichter Durchmesser ist so groß, daß sich das Saugrohr 23 leicht hindurchschieben läßt. Ihr Außengewinde paßt mit dem Innengewinde der Schraubmuffe 27 zusammen, und zwar mit dem freiliegenden Innengewinde links des Ringbundes 27a. Wenn sich die Schraubmuffe 27 in der Öffnung 3 der Hohlwalze befindet, muß noch ein so großer Ringspalt frei bleiben, daß im Reinigungsbetrieb genügend Luft in die Hohlwalze 1 eintreten kann.

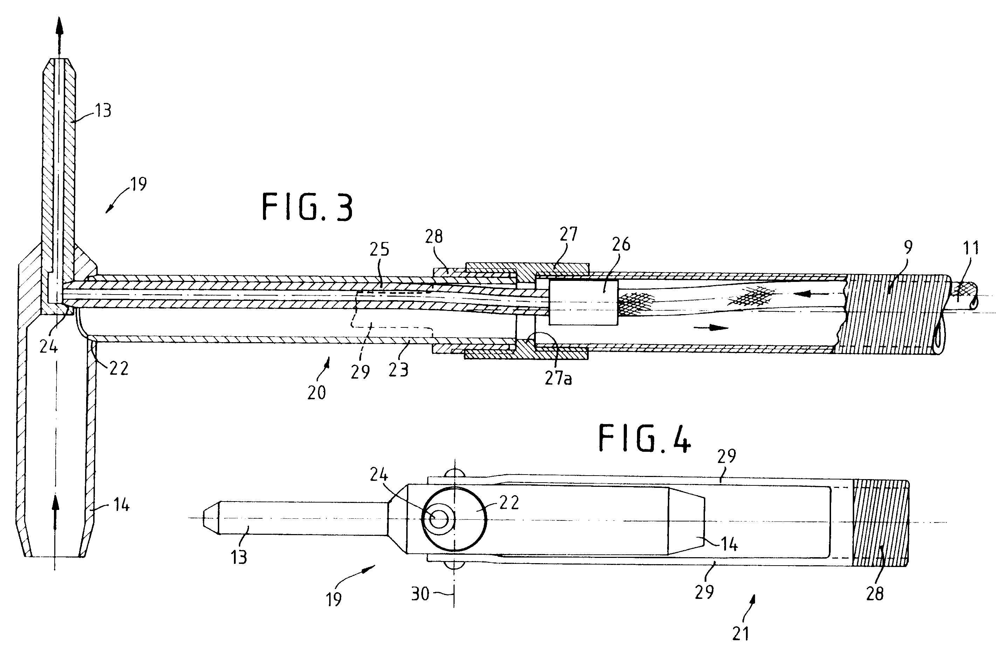

Die Inbetriebsetzung des beschriebenen Reinigungswerkzeugs verläuft wie folgt: Zunächst wird, wie in Fig. 3 bereits dargestellt, das Druckrohr 25 des Spannstücks 20 mittels der Anschlußverschraubung 26 mit dem durch ein Gewinderohr 9 geeigneter Länge gesteckten Hochdruckschlauch 11 verbunden. Nun wird die Traggabel 21 mit dem Düsenhalter 19 in Längsstellung gemäß Fig. 4 durch die Öffnung 3 eingeführt. Im Inneren der Hohlwalze 1 stellt sich der Düsenhalter 19 infolge des größeren Gewichts der Saugdüse 14 in die vertikale Stellung ein. Nun wird das Spannstück 20 durch die Gewindehülse 28 gesteckt. Durch weiteres Vorschieben des Spannstücks 20 findet dessen Vorderteil schließlich in die Steckfassung 22, 24 am Düsenhalter 19, wodurch gleichzeitig eine Arretierung in der Vertikalstellung erfolgt. Der folgende wichtige Aufbauschritt besteht darin, daß man durch Drehen des Gewinderohrs 9, auf dessen vorderes Ende die Schraubmuffe 27 fest aufgeschraubt ist, diese Schraubmuffe 27 mit der Gewindehülse 28 der Traggabel 21 verschraubt. Dabei legt sich der innere Rand des Ringbundes 27a an die Stirnfläche des Saugrohrs 23. Dieses wird also mit zunehmender Kraft zwischen der Steckfassung an der linken Seite und dem Ringbund an der rechten Seite eingespannt. Zum Festdrehen kann man die Traggabel 21, die noch aus der Walzenöffnung heraussteht, gegenhalten. Das Montageergebnis ist eine einwandfreie Abdichtung an beiden Seiten des Saugrohrs 23 sowie zwischen dem Druckrohr 25 und der Spritzdüse 13 und eine dauerhafte Festlegung des Spannstücks 20 gegenüber dem Düsenhalter 19. Die komplette Rohranordnung aus dem Saugrohr 23 und dem Gewinderohr 9 schließt die durchgehende Hochdruckleitung aus dem Druckrohr 25 und dem Hochdruckschlauch 11 ein.

Wenn die Spindelmutter 7 mittels ihrer Abstandshülse 8 an der Walze angebracht und das Kopfanschlußstück 10 am anderen Ende des Gewinderohrs 9 aufgesetzt ist, müssen nur noch die in Fig. 1 dargestellten Peripheriegeräte montiert und angeschlossen werden, um den Renigungsvorgang einleiten zu können. Dabei bewegt sich das Reinigungswerkzeug langsam in Längsrichtung durch die Walze, während sich diese gleichzeitig dreht. Durch die Kraft des Hochdruck-Wasserstrahls aus der Spritzdüse 13 werden die Kalk- und Schmutzablagerungen 31 (Fig. 2) an der Walzeninnenseite in einer schraubenförmigen Bahn entfernt. Gleichzeitig saugt die Saugdüse 14 die Ablagerungspartikel zusammen mit dem sich unten in der Walze sammelnden Wasser ein. Der Saugluftstrom fördert beides durch das Saugrohr 23, das anschließende Gewinderohr 9 und die Saugleitung 15 zum Wasservorabscheider, wo sich die Ablagerungen sammeln.

Üblicherweise beginnt man mit dem Reinigungsvorgang ganz innen am geschlossenen Ende der Walze und führt das Reinigungswerkzeug einmal hin und her. Für den Rückweg braucht lediglich die Drehrichtung des Motors 5 geändert zu werden. Die Länge des Gewinderohrs 9 ist auf die Walzenlänge abzustimmen. Bei sehr langen Walzen ist es hilfreich, an der Saugdüse einen höhenverstellbaren Stützfuß, eine Gleitkufe oder eine Rolle anzubringen, um stets den richtigen Abstand einerseits der Saugdüse 14 und andererseits der Spritzdüse 13 von der Walzeninnenfläche zu gewährleisten. Selbstverständlich muß der Abstand der beiden Düsen, d. h. die Länge des Düsenhalters 19 genau auf den Walzeninnendurchmesser abgestimmt sein.

| 1 | Hohlwalze |
|---|---|
| 2 | Lagerstelle |
| 3 | Öffnung |
| 4 | Riemenscheibe |
| 5 | Elektro-Getriebemotor |
| 6 | Walzenabschnitt |
| 7 | Spindelmutter |
| 8 | Abstandshülse |
| 9 | Gewinderohr |
| 10 | Kopfanschlußstück |
| 11 | Hochdruckschlauch |
| 12 | Hochdruck-Wasserpumpe |
| 13 | Spritzdüse |
| 14 | Saugdüse |
| 15 | Saugschlauch |
| 16 | Wasservorabscheider |
| 17 | Vakuumpumpe |
| 18 | Wasserfilter |
| 19 | Düsenhalter |
| 20 | Spannstück |
| 21 | Traggabel |
| 22 | Öffnung |
| 23 | Saugrohr |
| 24 | Hochdruck-Anschlußöffnung |
| 25 | Druckrohr |
| 26 | Anschlußverschraubung |
| 27 | Schraubmuffe |
| 27a | Ringbund |
| 28 | Gewindehülse |
| 29 | Gabelzinke |
| 30 | Querachse |
| 31 | Ablagerung |

**Patentansprüche**

1. Verfahren zur Reinigung des zylindrischen Innenraums von horizontal eingebauten wassergekühlten Hohlwalzen mit einer verhältnismäßig kleinen zentralen Walzenöffnung an einer Stirnseite, dadurch gekennzeichnet, daß die Verunreinigungen mittels eines Hochdruck-Wasserstrahls von der Mantelinnenfläche abgelöst, zerkleinert und gleichzeitig mit dem sich unten in der Hohlwalze (1) sammelnden Wasser abgesaugt werden.

2. Verfahren nach Anspruch 1, dadurch gekennzeichnet, daß eine mit einer Hochdruck-Wasserleitung (11) verbundene Spritzdüse (13) und eine mit einer Saugleitung (15) verbundene Saugdüse (14) bei sich drehender Hohlwalze (1) langsam im Innenraum in axialer Richtung gemeinsam bewegt werden.

3. Vorrichtung zur Durchführung des Verfahrens nach Anspruch 1, gekennzeichnet durch einen länglichen Düsenhalter (19), der an einem Ende mit einer Spritzdüse (13) und am entgegengesetzten Ende mit einer Saugdüse (14) versehen ist, durch einen durch die Walzenöffnung (3) steckbaren länglichen Träger, dessen inneres Ende etwa in der Mitte des Düsenhalters (19) mit diesem um eine gemeinsame Querachse (30) schwenkbar verbunden ist, und durch ein längliches Spannstück (20), welches den Düsenhalter (19) in einer Querstellung bezüglich des Trägers arretiert.

4. Vorrichtung nach Anspruch 3, dadurch gekennzeichnet, daß der Träger als Traggabel (21) ausgebildet ist mit einer Gewindehülse (28) oder dgl. und mit zwei an dieser an gegenüberliegenden Stellen des Umfangs ansitzenden etwa achsparallelen Zinken (29), deren freie Enden die Lagerstellen bilden, und daß das Spannstück (20) die Gewindehülse (28) durchsetzt und sich mittels eines Spannorgans (27) an dieser abstützt.

5. Vorrichtung nach Anspruch 3, dadurch gekennzeichnet, daß das Spannstück (20) ein Saugrohr (23) bildet und an der Saugdüse (14) des Düsenhalters (19) anschließbar ist.

6. Vorrichtung nach Anspruch 5, dadurch gekennzeichnet, daß das Spannstück als ein Saugund ein Druckrohr umfassendes Doppelrohr ausgebildet ist und daß am Düsenhalter Steckfassungen (22, 24) für die entsprechend geformten Anschlußenden des Doppelrohres vorgesehen sind.

7. Vorrichtung nach Anspruch 6, dadurch gekennzeichnet, daß das Druckrohr (25) in dem als Saugrohr (23) ausgebildeten Spannstück (20) und die an der Spritzdüse (13) angeschlossene Steckfassung (24) in der an der Saugdüse (14) angeschlossenen Steckfassung (22) enthalten ist.

8. Vorrichtung nach Anspruch 7, dadurch gekennzeichnet, daß an das Spannstück (20) ein mit einem durchgehenden Außengewinde versehenes Verlängerungsrohr (9) angeschlossen ist, welches mit dem Innengewinde einer an der Hohlwalze (1) befestigten Spindelmutter (7) zusammenwirkt.

9. Vorrichtung nach Anspruch 1, dadurch gekennzeichnet, daß zum Antrieb der zu reinigenden Walze ein rotierender Hydraulikmotor vorgesehen ist.

10. Vorrichtung nach Anspruch 1, dadurch gekennzeichnet, daß zum Vorschub des Düsenhalters ein Hydraulikzylinder vorgesehen ist.

# FIG. 1

EP 0 489 358 A1

FIG. 2

FIG.3

FIG.4

EP 0 489 358 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 307 243 (PAPENMEIER) <br> * Seite 4, Zeile 11 - Seite 5, Zeile 3 * <br> * Seite 6, Zeile 20 - Seite 6, Zeile 23; <br> Abbildung 1 * <br> --- | 1 | F28G1/16 <br> //A23G1/04 |
| A | DE-A-3 044 843 (IDRACOS SRL) <br> * Seite 7, Zeile 1 - Seite 9, Zeile 4; <br> Abbildungen 1-3 * <br> --- | 1 | |
| A | DE-A-3 048 955 (KLÖCKNER-HUMBOLDT-DEUTZ AG) <br> * Seite 9, Zeile 5 - Seite 13, Zeile 5; <br> Abbildungen 1,2 * <br> ----- | 1 | |
| | | | RECHERCHIERTE SACHGEBIETE (Int. Cl.5) |
| | | | F28G <br> A23G <br> F28F <br> F28D <br> B08B <br> B29B <br> B29C |

Der vorliegende Recherchenbericht wurde für alle Patentansprüche erstellt

| Recherchenort | Abschlußdatum der Recherche | Prüfer |
|---|---|---|
| DEN HAAG | 04 MAERZ 1992 | BELTZUNG F.C. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes
    Dokument

EPO FORM 1503 03.82 (P0403)